# EUROPEAN PATENT SPECIFICATION

(11) **EP 4 183 582 B1**
(45) Date of publication and mention of the grant of the patent: **26.02.2025**
(21) Application number: 21842731.8
(22) Date of filing: 07.07.2021
(51) Int. Cl.: B32B 3/30, B32B 7/02, B32B 27/08, B32B 27/30, B32B 27/36, B32B 27/40, B29C 48/00, B29C 48/08, B29C 48/21

(54) **RESIN SHEET HAVING HAIR-LIKE BODIES AND MOLDED ARTICLE OF SAME**
HARZFOLIE MIT HAARÄHNLICHEN KÖRPERN UND FORMARTIKEL DARAUS
FEUILLE DE RÉSINE PRÉSENTANT DES CORPS SEMBLABLES À DES CHEVEUX ET ARTICLE MOULÉ CORRESPONDANT

(30) Priority: 14.07.2020 JP 2020120628
(43) Date of publication of application: 24.05.2023
(73) Proprietor: Denka Company Limited, Tokyo 103-8338 (JP)
(72) Inventor: MAEDA, Keishi, Tokyo 103-8338 (JP); TOYAMA, Hiroko, Tokyo 103-8338 (JP)
(74) Representative: Murgitroyd & Company
(86) International application number: PCT/JP2021/025632
(87) International publication number: WO 2022/014439

(56) References cited:
- WO-A1-2014/097999
- WO-A1-2018/016562
- WO-A1-2018/181319
- WO-A1-2019/049897
- WO-A1-2019/146635
- WO-A1-2020/100930
- WO-A1-2020/116453
- WO-A1-2020/116453
- JP-A- 2019 108 619
- JP-A- H 071 626
- JP-A- S6 490 711
- US-A1- 2019 283 301
- US-A1- 2020 215 787
- US-B1- 9 987 907

## Description

### TECHNICAL FIELD

The present invention pertains to a resin sheet having hair-like bodies and a molded article of the same.

### BACKGROUND

Conventionally, sheets of paper and polymer materials are used as interior materials of automobiles and the housings of associated components, housings of electronic devices and home appliances, building materials such as wallpaper, housings for toys and game consoles, and members of daily commodities. Further, as a method to provide a good tactile sensation to a surface of a sheet, Patent Document 1, for example, presents a resin sheet having hair-like bodies arranged regularly on a surface thereof. Further the disclosure of US 2020/215787 A1 may be helpful for understanding the present invention as it discloses a sheet expressing a good tactile sensation and a molded product thereof. By configuring a resin sheet including hairlike bodies arranged regularly on at least one surface of an underlayer in which a continuous phase is formed without any structural boundary between the underlayer and the hairlike bodies, and the underlayer and the hairlike bodies have at least partially a crosslinked structure, a molded product expressing a good tactile sensation is obtained.

Patent Document 1: WO 2018/016562 A

### SUMMARY OF THE INVENTION

### TECHNICAL PROBLEM

Meanwhile, the shapes of, for example, interior members of automobiles are becoming complicated in order to improve design. Thus, the provision of a resin sheet which can be secondarily molded on a member surface without breaks occurring or good tactile sensation being lost even when the shape of the member surface is complex is desired.

The problem to be solved by the present invention is to provide a resin sheet which has good tactile sensation and can be secondarily molded on a member surface having a complicated shape, and a molded article thereof.

### SOLUTION TO PROBLEM

That is, as a result of investigating various means, the present inventors discovered that by configuring a resin sheet having: a base layer having hair-like bodies arranged regularly on one surface thereof; and a substrate layer on the surface opposite the hair-like bodies of the base layer, wherein a thickness (a) of the substrate layer is 10 µm or greater and 250 µm or less, the thickness (a) of the substrate layer and a thickness (b) of the base layer satisfy a ≤ b, the substrate layer comprises a polycarbonate-based resin, and the base layer and hair-like bodies comprise a thermoplastic polyurethane resin, the resin sheet has a good tactile sensation and can be secondarily molded on a member surface having a complex shape, thereby arriving at the present invention.

The present invention, which solves the above problem, refers to a resin sheet according to claim 1, a molded article according to claim 5 and a method according to claim 7. Advantageous embodiments may include features of depending claims.

### EFFECTS OF INVENTION

According to the present invention, a resin sheet which has good tactile sensation and can be secondarily molded on a member surface having a complicated shape and a molded article thereof can be provided.

### BRIEF DESCRIPTION OF DRAWINGS

Fig. 1 is a vertical side cross-sectional schematic view showing a resin sheet according to a first embodiment of the present invention.
Fig. 2 is a schematic plan view of the resin sheet of Fig. 1.
Fig. 3 is a vertical side cross-sectional schematic view showing the layer structure of a resin sheet according to a second embodiment of the present invention.

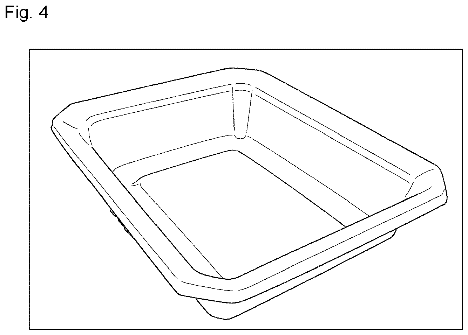

Fig. 4 is an illustration of a container for storing miscellaneous goods used in formativeness evaluation.

### DESCRIPTION OF EMBODIMENTS

Below, various embodiments of the resin sheet shall be explained, followed by an explanation of the method for manufacturing the resin sheet, but in cases in which the specific explanation of one embodiment described herein applies to another embodiment, the explanation thereof for the other embodiment shall be omitted.

### [First Embodiment]

The resin sheet according to a first embodiment of the present invention is a resin sheet having: a base layer having hair-like bodies arranged regularly on one surface thereof; and a substrate layer on the surface opposite the hair-like bodies of the base layer, wherein the thickness (a) of the substrate layer is 10 µm or greater and 250 µm or less, the thickness (a) of the substrate layer and the thickness (b) of the base layer satisfy a ≤ b, the substrate layer comprises a polycarbonate-based resin, and the base layer and hair-like bodies comprise a thermoplastic polyurethane resin.

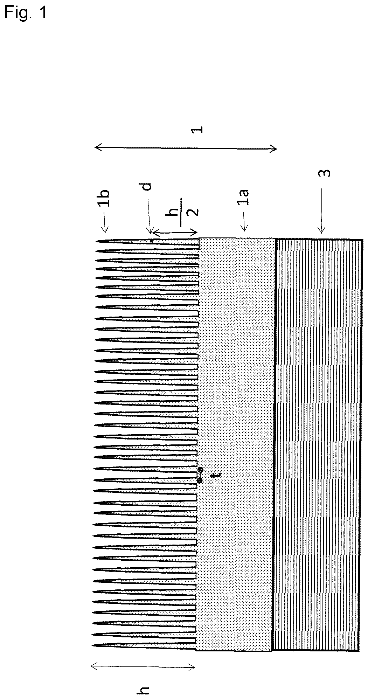

As shown in Fig. 1, the hair-like bodies and the base layer, and the substrate layer are directly laminated. That is, the layer configuration of the resin sheet according to the first embodiment is, from top to bottom, the hair-like bodies and the base layer/the substrate layer. The substrate layer in the present embodiment is preferably a layer provided with sufficient adhesion with the base layer.

### <Base Layer>

A base layer (1a) is a layer serving as a base for hair-like bodies and refers to the portion of the surface, denoted by reference sign 1, other than the hair-like bodies 1b. The thickness of the base layer refers to the thickness from the roots of the hair-like bodies to the surface opposite the base layer. The average thickness of the substrate layer is preferably 10 µm or greater and 500 µm or less, more preferably 50 µm or greater and 450 µm or less, and still more preferably 100 µm or greater and 400 µm or less. By setting the thickness to 10 µm or greater, the height of the hair-like bodies can be sufficiently expressed. Further, by setting the thickness to 500 µm or less, the hair-like bodies can be formed efficiently. A continuous phase may be formed without a structural boundary between the base layer and the hair-like bodies. The absence of a structural boundary means that the base layer and the hair-like bodies are integrally formed and that there is no structurally clear boundary section therebetween. Further, forming a continuous phase refers to a state in which there is no seam between the base layer and the hair-like bodies and no discontinuities (a continuous phase is formed). On this point, the present invention differs from a structure in which hair-like bodies are transplanted to a base layer. The base layer and the hair-like bodies may have the same composition and the bonds between the base layer and the hair-like bodies may include covalent bonds. A covalent bond refers to a chemical bond formed by an electron pair being shared by two atoms and in thermoplastic resins which are chain molecules in which monomers are connected, each polymer is bonded by a covalent bond and is bonded more strongly than by the van der Waals bonds or hydrogen bonds acting between polymer molecules.

Further, the base layer and the hair-like bodies may be derived not from separate, but from the same solid thermoplastic resin sheet. Derived from the same solid thermoplastic resin sheet means, for example, the hair-like bodies and the base layer being obtained, directly or indirectly, based on the same resin sheet.

Further, the base layer and the hair-like bodies may be formed from the same solid thermoplastic resin sheet. Formed from the same solid thermoplastic resin sheet means that the hair-like bodies and the base layer are directly formed by processing a single resin sheet.

By forming a continuous phase without a structural boundary between the base layer and the hair-like bodies, the hair-like bodies separating from the base layer due to an external stimulus is suppressed and a sheet having a good tactile sensation is achieved. Further, manufacturing with fewer steps than when transplanting hair-like bodies is possible.

The base layer and the hair-like bodies comprise the same resin composition having a thermoplastic resin as a main component. Here, as a main component means containing 50% by mass or greater. The base layer and the hair-like bodies preferably contain 60% by mass or greater, 70% by mass or greater, 80% by mass or greater, or 90% by mass or greater of a thermoplastic resin. The base layer and the hair-like bodies contain 50% by mass or greater, 60% by mass or greater, 70% by mass or greater, 80% by mass or greater, or 90% by mass or greater of a thermoplastic polyurethane resin as the thermoplastic resin in the first embodiment of the present invention. In other embodiments, the base layer and the hair-like bodies can further comprise one or more other thermoplastic resins from styrene-based resins, olefin-based resins, polyvinyl chloride resins, thermoplastic elastomers, and fluorine-based resins. The content of the other thermoplastic resin can be set to 10% by mass or greater and 50% by mass or less in the total resin composition.

A thermoplastic polyurethane resin is a resin that has an isocyanate and a polyol as raw materials and as the combination thereof, any one combination in which the isocyanate is diphenylmethane diisocynate (MDI)-based, H₁₂ MDI-based, or hexamethylene diisocyanate (HDI)-based and the polyol is polyether-based, polyester-based, or polycarbonate-based may be selected, or a plurality thereof may be combined. In one embodiment of the present invention, a combination of an HDI-based isocyanate and a carbonate-based polyol can be suitably used.

As the styrene-based resin, a styrene-based monomer such as styrene, α-methylstyrene, p-methylstyrene, dimethylstyrene, p-t-butylstyrene, or chlorostyrene alone or a copolymer thereof, a copolymer of such a styrene-based monomer and another monomer, for example, a styrene-acrylonitrile copolymer (AS resin), or of the styrene-based monomer and yet another polymer, for example, a graft polymer which was graft polymerized in the presence of a diene-based rubber-like polymer such as polybutadiene, a styrene-butadiene copolymer, polyisoprene, or polychloroprene, or a polystyrene such as, for example, high-impact polystyrene (HIPS resin) or a styrene-acrylonitrile graft polymer (ABS resin) can be used. Further, a styrene-based thermoplastic elastomer can also be used.

Polyolefin-based resin means a resin comprising a polymer including α-olefin as a monomer. Examples of polyolefin-based resins include polyethylene-based resins and polypropylene-based resins. A high-density polyethylene, a low-density polyethylene, a linear low-density polyethylene, a linear medium-density polyethylene, and the like can be used as the polyethylene resin and not only these alone, but a copolymer, graft, or blend having these structures can also be used. Examples of the latter resin include, for instance, products of copolymerizing or blending a resin having a polar group in a polyethylene chain, such as blends with an ethylene-vinyl acetate copolymer, an ethylene-acrylic acid copolymer, an ethylene-acrylic ester copolymer, an ethylene methacrylic ester copolymer, an ethylene-vinyl acetate-vinyl chloride copolymer, or a three-component copolymer with a further acid anhydride.

Further, a homopolypropylene, a random polypropylene, a block polypropylene, or the like can be used as the polypropylene resin. When using a homopolypropylene, the structure of the homopolypropylene may be any of isotactic, atactic, or syndiotactic. When using a random polypropylene, a substance preferably having 2-20 carbon atoms and more preferably having 4-12 carbon atoms, for example, ethylene, 1-butene, 1-pentene, 1-hexene, 1-heptene, 1-octene, 1-nonene, or 1-decene can be used as the α-olefin to be copolymerized with propylene. When using a block polypropylene, a block copolymer (block polypropylene), a block copolymer comprising a rubber component, a graft copolymer, or the like can be used. In addition to using these olefin-based resins alone, they can also be used in combination with other olefin-based resins.

A vinyl chloride homopolymer or a copolymer of vinyl chloride and another comonomer can be used as the polyvinyl chloride resin. When the polyvinyl chloride is a copolymer, the polyvinyl chloride may be a random copolymer or may be a graft copolymer. One example of a graft copolymer is a copolymer in which, for instance, an ethylene-vinyl acetate copolymer or a thermoplastic urethane polymer is made the backbone polymer and vinyl chloride is graft polymerized thereto. The polyvinyl chloride of the present embodiment is a composition demonstrating an extrusion-moldable soft polyvinyl chloride and containing an additive such as a polymer plasticizer. A known polymer plasticizer can be used as the polymer plasticizer, but, for example, an ethylene copolymer polymer plasticizer such as an ethylene-vinyl acetate-carbon monoxide copolymer, an ethylene-(meth)acrylic ester-carbon monoxide copolymer, or an ethylene-vinyl acetate copolymer with a high vinyl acetate content can be raised as a preferred example.

The thermoplastic elastomer includes elastomers having a structure in which a soft polymer substance and a hard polymer substance are combined. Specifically, examples include styrene-based elastomers, olefin-based elastomers, vinyl chloride-based elastomers, polyester-based elastomers, and polyamide-based elastomers. These elastomers can be selected from among those generally commercially available and used.

A vinylidene fluoride homopolymer and a vinylidene fluoride copolymer having vinylidene fluoride as the main component can be used as the fluorine-based resin. Polyvinylidene fluoride (PVDF) resins are crystalline resins exhibiting various crystal structures such as α-type, β-type, γ-type, and αp-type and examples of the vinylidene fluoride copolymer include, for instance, vinylidene fluoride-hexafluoropropylene copolymers, vinylidene fluoride-tetrafluoroethylene copolymers, vinylidene fluoride-chlorotrifluoroethylene copolymers, vinylidene fluoride-trifluoroethylene copolymers, vinylidene fluoride-tetrafluoroethylene-hexafluoropropylene three-component copolymers, vinylidene fluoride-chlorotrifluoroethylene-hexafluoropropylene three-component copolymers, and mixtures of two or more thereof.

The melt mass flow rate of the thermoplastic resin at 190°C to 300°C is preferably 4 g/10 minutes or greater. By setting the rate to 4 g/10 minutes or greater, the transferability of the shape of the hair-like bodies can be improved. In addition, the melt mass flow rate is a value measured according to JIS K 7210 under the conditions of a load (2.16 kg to 10.0 kg) at a test temperature in the temperature range from 190°C to 300°C.

The thermoplastic resin may be alloyed with the abovementioned thermoplastic resins at any ratio so long as the effects of the present invention are not inhibited. Furthermore, the thermoplastic resin may contain other additives. An additive such as a water/oil repellent, a colorant such as a pigment or a dye, a mold release agent such as silicone oil or an alkyl ester-based agent, a fibrous reinforcing agent such as glass fibers, or as a filler, a granular microparticle such as talc, clay, or silica or a scaly microparticle such as mica, a low molecular weight type anti-static agent such as a salt compound of sulfonic acid and an alkali metal or the like or a high molecular weight type anti-static agent such as polyether ester amide, a flame retardant, an anti-bacterial agent, an anti-viral agent, or a heat stabilizer can be added as the other additives, so long as the effects of the present invention are not inhibited. Further, scrap resin generated in the resin sheet manufacturing process can also be mixed and used.

Examples of the water/oil repellent include silicone-based water repellents, carnauba wax, and fluorine-based water/oil repellents. Examples of the silicone include organopolysiloxane, dimethylpolysiloxane, methylphenylpolysiloxane, methylhydrogenpolysiloxane, and the like and among these, dimethylpolysiloxane is suitably used. Examples of commercially available products include, for instance, "Clinbell CB50-PP", "Clinbell CB-30PE", "Clinbell CB-1", "Clinbell CB-50AB" (manufactured by Fuji Chemical Industries, Ltd.), and the like in which silicone is alloyed with a resin. Examples of the carnauba wax include, as commercially available products, "Carnauba No. 1" (manufactured by NIKKO RICA CORPORATION) and the like. Examples of the fluorine-based water/oil repellent include surfactants having a perfluoroalkyl group and also include, as a commercially available product, "Surflon KT-PA" (manufactured by AGC SEIMI CHEMICAL CO., LTD.). The amount of the water/oil repellent added is preferably 0.5% by mass to 25% by mass. At less than 0.5% by mass, sufficient water/oil repelling effects may not be obtained and at greater than 25% by mass, the moldability may worsen.

Examples of the anti-static agent include polyether ester amide-based high molecular weight type anti-static agents, ionomer-based high molecular weight type anti-static agents, and the like. Examples of the polyether ester amide-based high molecular weight type anti-static agent include, as commercially available products, "Pelestat 230," "Pelestat 6500," "Pelectron AS," "Pelectron HS" (manufactured by Sanyo Chemical Industries, Ltd.), and the like. Examples of the ionomer-based high molecular weight type anti-static agent include, as commercially available products, "Entira SD100", "Entira MK400" (manufactured by DU PONT-MITSUI POLYCHEMICALS), and the like. The amount of the anti-static agent added is preferably 5% by mass to 30% by mass. At less than 5% by mass, sufficient anti-static properties may be unobtainable and at greater than 30% by mass, the production costs increase.

As the anti-bacterial agent, either an inorganic or organic antibacterial agent may be added. Considering dispersibility, inorganic agents are preferable. Specifically, examples include metal ion (Ag, Zn, Cu) inorganic anti-bacterial agents, calcined shell calcium-based anti-bacterial agents, and the like. Examples of commercially available metal ion inorganic anti-bacterial agents include "Bactekiller BM102VT" (manufactured by Fuji Chemical Industries, Ltd.), "Novaron VZF200," "Novaron (AG300)" (manufactured by TOAGOSEI CO., LTD.), "KM-10D-G," "IM-10D-L" (manufactured by Sinanen Zeomic Co., Ltd.), and the like. Examples of calcined shell calcium-based anti-bacterial agents include "Scallow" (manufactured by FID, Ltd.) and the like. The amount of the anti-bacterial agent added is preferably 0.5% by mass to 5% by mass. At less than 0.5% by mass, sufficient anti-bacterial properties may be unobtainable and at greater than 5% by mass, the production costs increase.

As the lubricant/mold release agent, an alkyl-based mold release agent such as an aliphatic hydrocarbon-based compound, a higher fatty acid-based compound, a higher aliphatic alcohol-based compound, or a fatty acid amide-based compound, a silicone-based mold release agent, a fluorine-based mold release agent, and the like can be used. When a mold release agent is used, the amount added is preferably 0.01-5 parts by mass, more preferably 0.05-3 parts by mass, and still more preferably 0.1-2 parts by mass of a total of 100 parts by mass with the resin composition. When the amount added is less than 0.01 parts by mass, the mold releasing effect may be reduced and at greater than 5 parts by mass, bleed-out may occur on the sheet surface.

Further, it is also possible to use a masterbatch or the like in which a lubricant/mold release agent is alloyed in advance with a thermoplastic resin. Examples of commercially available masterbatches with a urethane-based thermoplastic elastomer base include, for instance, "Waxmaster V" (manufactured by BASF) and considering production efficiency, it is preferable that a masterbatch be used. The amount of masterbatch added is preferably 1-8 parts by mass, more preferably 2-7 parts by mass, and still more preferably 3-6 parts by mass of a total of 100 parts by mass with the resin composition.

### <Hair-like Bodies>

Hair-like bodies (1b) refers to a portion extending hair-like from the surface of the base layer (1a), as shown in Fig. 1. The hair-like bodies are arranged regularly on the surface of the base layer. Here, arranged regularly means a state in which the hair-like bodies are not arranged randomly, that is, a state arranged in an orderly fashion (e.g., at fixed spacing) in one direction or in two directions. Whether or not the arrangement of the hair-like bodies is regular is determined based on the state of arrangement of the roots of the hair-like bodies. In certain embodiments, the hair-like bodies are positioned on the base layer at a predetermined spacing and the positions of the bottom surfaces of the hair-like bodies are arranged in an orderly fashion in the longitudinal direction and the transverse direction of the base layer. Moreover, the form of arrangement of the hair-like bodies is not particularly limited and a vertically and horizontally arranged grid arrangement, a staggered arrangement, or the like can be selected. Due to the hair-like bodies being arranged regularly on the surface of the base layer, a good tactile sensation is readily expressed, uniformly and without irregularities. Falling of the hair-like bodies occurs due to the application of a load such as, for example, tracing with a finger and finger marks in which the gloss and color tone differ from those of the surrounding portion can be formed. Further, due to the hair-like bodies, the tactile sensation can become like that of a suede-like napped sheet.

The average height (h) of the hair-like bodies is preferably 30-500 µm, more preferably 30-250 µm, still more preferably 30-200 µm, and especially preferably 90-200 µm. By setting the average height to 30 µm or greater, a good tactile sensation can be sufficiently ensured and by setting the average height to 500 µm or less, a good tactile sensation such as moistness, softness, or fluffiness is obtained.

When the hair-like bodies stand roughly straight with respect to the base layer, the length from the root to the tip of the hair-like bodies represents the height of the hair-like bodies. Meanwhile, when the hair-like bodies are slanted with respect to the base layer or when the hair-like bodies have a portion that curls, the distance from the surface of the base layer at the location of the hair-like bodies most removed from the surface of the base layer is made the height h of the hair-like bodies. Further, the total value of the spacing from the tip to a central portion of the root of the hair-like bodies, segmented by multi-point measurement, is made the length L of the hair-like bodies.

The height of the hair-like bodies and the length of the hair-like bodies are measured, using an electron microscope and image processing software, at a number of arbitrary locations on the resin sheet and the arithmetic mean values of the measurements can be used as the average height of the hairlike bodies and the average length of the hair-like bodies.

The average diameter (d) of the hair-like bodies is preferably 1-60 µm, more preferably 5-50 µm, and still more preferably 5-40 µm. By setting the average diameter of the hair-like bodies to 1 µm or greater, a good tactile sensation can be ensured and by setting the average diameter of the hair-like bodies to 60 µm or less, a good tactile sensation such as moistness, softness, or fluffiness is obtained. The average diameter of the hair-like bodies is a value obtained by using the arithmetic mean value of measurements of the diameter at mid-height (h/2) of the hair-like bodies at a number of locations on the resin sheet using an electron microscope and image processing software.

Further, the aspect ratio of the hair-like bodies can be represented as (average height of the hair-like bodies/average diameter of the hair-like bodies). The aspect ratio of the hair-like bodies is preferably 2-20, more preferably 2-10, and still more preferably 2-5. By setting the aspect ratio to 2 or greater, a good tactile sensation can be ensured and by setting the aspect ratio to 20 or less, not only is a good tactile sensation such as moistness, softness, or fluffiness obtained, but the risk of the height-to-length ratio of the hair-like bodies becoming no higher than a certain level can be reduced.

Meanwhile, the average bottom surface diameter of the hair-like bodies can also serve as a reference for the aspect ratio. The average bottom surface diameter of the hair-like bodies is preferably 10-150 µm. The average bottom surface diameter of the hair-like bodies is a value obtained by using the arithmetic mean value of measurements of the spacing between neighboring hair-like bodies at a number of locations on the resin sheet. The aspect ratio, when the bottom surface diameter of the hair-like bodies serves as a reference therefor, is preferably 1.0-10, more preferably 1.0-5, and still more preferably 1.0-2.5. By setting the aspect ratio to 1.0 or greater, a good tactile sensation can be ensured and by setting the aspect ratio to 10 or less, not only is a good tactile sensation such as moistness, softness, or fluffiness obtained, but the risk of the height-to-length ratio of the hair-like bodies becoming no higher than a certain level can be reduced.

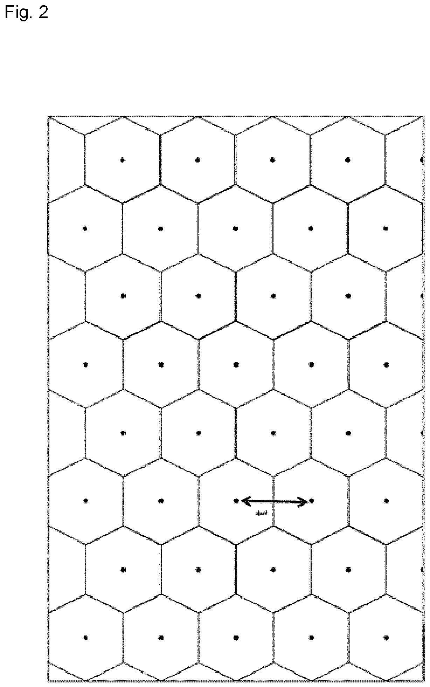

The average spacing (t) between the hair-like bodies is preferably 20-200 µm, more preferably 40-150 µm, and still more preferably 40-100 µm. As shown in, for example, Fig. 2, the spacing between the hair-like bodies means the distance from the center of the root of a hair-like body to the center of the root of a neighboring hair-like body. By setting the average spacing to 20 µm or greater, a good tactile sensation is ensured and by setting the average spacing to 200 µm or less, a good tactile sensation such as moistness, softness, or fluffiness is obtained. The average spacing between the hair-like bodies is a value obtained by using the arithmetic mean value of measurements of the spacing between neighboring hair-like bodies at a number of locations on the resin sheet.

The shape of the hair-like bodies is not particularly limited and may be configured to extend hair-like in a direction away from the base layer in a shape in which the hair-like bodies gradually thin approaching the tip or in which a swelling is formed at the tip. That is, the hair-like bodies may have a shape in which the cross-sectional area gradually shrinks with increasing distance from the base layer and then once again increases when the shape terminates. Further, the shape of the tip part of the hair-like bodies may be bud-shaped or mushroom-shaped. Moreover, the hair-like bodies may have a portion positioned at the base end extending in a direction away from the base layer, a portion that extends from the portion positioned at the base end and is curved with a fixed curvature or a curvature that gradually changes, and furthermore, a portion that is wound in a helix shape or a spiral shape. In this case, the tip parts of the hair-like bodies may have a shape that is folded inward. By having such a shape, a good tactile sensation is expressed. Further, due to the bud-shaped or mushroom-shaped portion being hollow, a better tactile sensation is expressed. When forming a bud-shaped or mushroom-shaped portion at the hair-like tips, it is preferable that the ratio of the average diameter of the width of the bud shape or mushroom shape with respect to the average diameter of the hair-like bodies be 1.1 or greater. The height of the bud shape or mushroom shape is preferably 7 µm or greater. The average diameter of the hair-like bodies and the average diameter of the width and the height of the bud shape or mushroom shape are values obtained by using the arithmetic mean value of measurements made with a scanning electron microscope photograph. The hair-like bodies comprise a thermoplastic resin. The same resins that can be used in the base layer can be used as the thermoplastic resin.

The thermoplastic resin included in the base layer and the hair-like bodies may form an at least partially three-dimensional cross-linked structure (for example, a three-dimensional net-like structure). For example, it may be such that in certain embodiments, at least part of the hair-like bodies is a cross-linked body, in other embodiments, the entire surface of the hair-like bodies is a cross-linked body, and in yet other embodiments, the entirety (from the boundary with the base layer to the tip part) of the hair-like bodies is a cross-linked body. Examples of methods for forming a cross-linked body include, for instance, methods involving forming a resin sheet and then irradiating a surface thereof having hair-like bodies with an electron beam and methods involving adding an organic peroxide and forming by heating and humidifying during or after molding of the resin sheet. Examples of resins in which an organic peroxide is added include, among commercially available products, "LINKLON" manufactured by Mitsubishi Chemical Corporation and the like. In the present embodiment, it is preferable that cross-linked bodies be formed by electron beam irradiation (electron beam cross-linked bodies).

### <Substrate Layer>

It is preferable that a thermoplastic resin with excellent adhesiveness with the base layer be used as the substrate layer in the resin sheet according to the first embodiment and a polycarbonate-based resin can be used.

In other embodiments, a substance wherein a thermoplastic resin such as an olefin-based resin, a polyester-based resin, a nylon-based resin, an acrylic resin, or a thermoplastic elastomer is polymer-alloyed at an arbitrary proportion with a polycarbonate-based resin can be used.

The polymer-alloying ratio is preferably 99:1 to 20:80, more preferably 80:20 to 30:70, and still more preferably 60:40 to 40:60. Further, when laminating, there is lamination by coextrusion molding and lamination by extrusion laminate molding or dry laminate molding using a non-stretched film or a biaxially stretched film.

Examples of the polycarbonate-based resin include substances derived from aliphatic dihydroxy compounds and substances derived from aromatic dihydroxy compounds. For example, substances derived from aromatic dihydroxy compounds can be suitably used and substances derived from aromatic dihydroxy compounds (bisphenols) in which two aromatic dihydroxy compounds are bonded via a certain type of bonding group are particularly preferable. Substances manufactured by known manufacturing methods by polycondensation of a dihydroxy compound and phosgene or carbonic ester can be used as these resins. The manufacturing method is not limited and commercially available resins can also be used.

The substrate layer may contain other additives as necessary. An additive such as a water repellent, an oil repellent, a colorant such as a pigment or a dye, a lubricant/mold release agent such as silicone oil or an alkyl ester-based agent, a fibrous reinforcing agent such as glass fibers, or as a filler, a granular microparticle such as talc, clay, or silica or a scaly microparticle such as mica, a low molecular weight type anti-static agent such as a salt compound of sulfonic acid and an alkali metal or the like or a high molecular weight type anti-static agent such as polyether ester amide, a flame retardant, an anti-bacterial agent, an anti-viral agent, or a heat stabilizer can be added as the other additives so long as the effects of the present invention are not inhibited. Further, scrap resin generated in the resin sheet manufacturing process can be mixed and used. Moreover, in the present embodiment, so long as the effects of the present invention are not inhibited, the substrate layer may have a partially cross-linked structure.

Further, in the present embodiment, so long as the effects of the present invention are not inhibited, the substrate layer may have a partially cross-linked structure.

In the embodiments of the present invention, the average thickness of the substrate layer is 10-250 µm, more preferably 30-230 µm, and still more preferably 50-220 µm. By setting the average thickness to 10 µm or greater, the film-forming process is facilitated and by setting the average thickness to 250 µm or less, the stiffness value increasing is suppressed.

### <Resin Sheet>

The resin sheet in one embodiment of the present invention has good tactile sensation and can be secondarily molded on a member surface having a complicated shape. If the resin sheet can be secondarily molded on a member surface having a complicated shape, the resin sheet is suited for use on surfaces of automobile interior members, electronic components, electronic component cladding, cosmetic containers, container members, and the like.

In the present embodiment, "tactile sensation" means the feeling and texture of a surface of the resin sheet. A judgment is made regarding whether a resin sheet surface feels comfortable when touched and when the surface is judged as feeling comfortable, a good specific texture such as moistness, softness, or fluffiness is made the good tactile sensation.

In the embodiments of the present invention, the thickness (a) of the substrate layer and the thickness (b) of the base layer of the resin sheet satisfy a ≤ b. By satisfying a ≤ b, the stiffness becoming a high value is suppressed and the resin sheet can be secondarily molded on a member surface having a complicated shape.

In one embodiment of the present invention, the thickness of the resin sheet refers to the sheet thickness combining the average height of the hair-like bodies, the average thickness of the base layer, and the average thickness of the substrate layer. The sheet thickness is preferably 80-1000 µm, more preferably 150-900 µm, and still more preferably 300-800 µm. By setting the thickness to 80 µm or greater, a good tactile sensation can be sufficiently ensured and by setting the thickness to 1000 µm or less, manufacturing costs can be suppressed.

Further, in one embodiment of the present invention, the total thickness of the base layer and the substrate layer is preferably 20-750 µm, more preferably 150-600 µm, and still more preferably 300-500 µm.

In the embodiments of the present invention, the stiffness of the resin sheet measured in accordance with the 45° cantilever method in JIS L 1096:2010 is 150 mm or less, more preferably 120 mm or less, and still more preferably 100 mm or less. However, when the stiffness on either the front and back and in either the vertical direction or the horizontal direction becomes greater than 150 mm, the stiffness of the resin sheet is deemed to be greater than 150 mm. In one embodiment of the present invention, the stiffness of the resin sheet measured according to the 45° cantilever method in JIS L 1096:2010 is 30 mm or greater, more preferably 40 mm or greater, and still more preferably 50 mm or greater. By setting the stiffness of the resin sheet to 150 mm or less, the resin sheet can be secondarily molded on a member surface having a complicated shape. Further, by setting the stiffness of the resin sheet to 30 mm or greater, wrinkles occurring during extrusion molding and the resin sheet thereby becoming unable to be wound is suppressed. Moreover, the stiffness of the resin sheet on either the front or back and in either the vertical direction or the horizontal direction in other embodiments of the present invention is 30 mm or greater and 150 mm or less, more preferably 40 mm or greater and 120 mm or less, and still more preferably 50 mm or greater and 100 mm or less.

### [Second Embodiment]

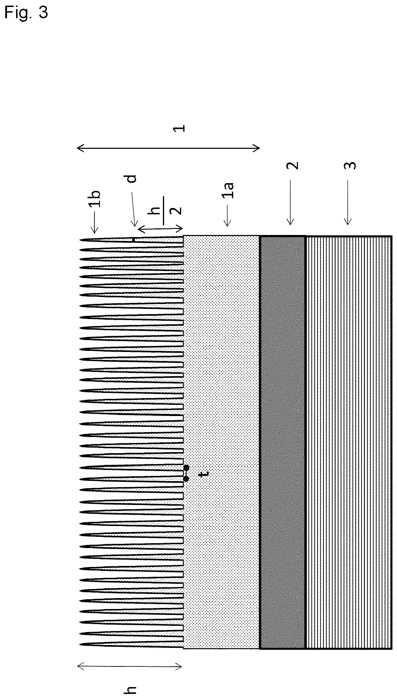

An example of the resin sheet according to the second embodiment of the present invention is a resin sheet in which a sealant resin layer (2) is formed between the base layer (1) and the substrate layer (3), as shown in Fig. 3. That is, the layer configuration of the resin sheet according to the second embodiment is, from top to bottom, the hair-like bodies and the base layer (1), the sealant resin layer (2), and the substrate layer (3). Here, the hair-like bodies are the same as those explained in the first embodiment, so explanation thereof is omitted.

### <Sealant Resin Layer>

The sealant resin layer is for causing adhesion between the base layer and the substrate layer to be expressed and a modified olefin-based resin, a hydrogenated styrene-based thermoplastic elastomer, and the like can be used as resin components.

Olefin-based resins such as olefins with about 2-8 carbon atoms such as ethylene, propylene, and butene-1, copolymers of these olefins and other olefins with about 2-20 carbon atoms such as ethylene, propylene, butene-1,3-methylbutene-1, pentene-1,4-methylpentene-1, hexene-1, octene-1, and decene-1 or copolymers of these olefins and vinyl compounds such as vinyl acetate, vinyl chloride, acrylic acid, methacrylic acid, acrylic ester, methacrylic ester, and styrene, and olefin-based rubbers such as ethylene-propylene copolymers, ethylene-propylene-diene copolymers, ethylene-butene-1 copolymers, and propylene-butene-1 copolymers modified under graft reaction conditions with unsaturated carboxylic acids such as acrylic acid, methacrylic acid, crotonic acid, isocrotonic acid, maleic acid, fumaric acid, itaconic acid, citraconic acid, and tetrahydrophthalic acid or derivatives of the acids such as halides, amides, imides, anhydrides, and esters, specifically, malonyl chloride, maleimide, maleic anhydride, citraconic anhydride, monomethyl maleate, dimethyl maleate, and glycidyl maleate can be used as the modified olefin-based resin.

Among these, an "ethylene-propylene-diene copolymer" or ethylene-propylene or butene-1 copolymer rubber modified with an unsaturated dicarboxylic acid or an anhydride thereof, in particular maleic acid or an anhydride thereof, is suitable.

A hydrogenated copolymer of a styrene-based monomer and butadiene or isoprene, a hydrogenated styrene-butadiene-styrene block copolymer (styrene-ethylene/butylene-styrene block copolymer), a hydrogenated styrene-isoprene-styrene block copolymer (styrene-ethylene/propylene-styrene block copolymer), or the like can be used as the hydrogenated styrene-based thermoplastic elastomer and, in particular, a styrene-ethylene/butylene-styrene block copolymer is preferable.

The average thickness of the sealant resin layer is preferably 20-90 µm and more preferably 40-80 µm. By setting the average thickness to 20 µm or greater, interlayer separation occurring between the base layer and the substrate layer can be suppressed and by setting the average thickness to 90 µm or less, production costs can be suppressed.

The abovementioned thermoplastic resins may be alloyed with the sealant resin layer at any ratio, as necessary, so long as the effects of the present invention are not inhibited. Furthermore, other additives may also be included. An additive such as a water repellent, an oil repellent, a colorant such as a pigment or a dye, a lubricating material/mold release agent such as silicone oil or an alkyl ester-based agent, a fibrous reinforcing agent such as glass fibers, or as a filler, a granular microparticle such as talc, clay, or silica or a scaly microparticle such as mica, a low molecular weight type anti-static agent such as a salt compound of sulfonic acid and an alkali metal and the like or a high molecular weight type anti-static agent such as polyether ester amide, an ultraviolet light absorber, a flame retardant, an anti-bacterial agent, an anti-viral agent, or a heat stabilizer can be added as the other additives, so long as the effects of the present invention are not inhibited. Further, in the present embodiment, so long as the effects of the present invention are not inhibited, the sealant resin layer may have a partially cross-linked structure.

### [Resin Sheet Manufacture]

The method for manufacturing a resin sheet according to the present invention is not limited and may be any method, but typically includes steps of melt-extruding a raw material resin and adding regularly arranged hair-like bodies to at least one surface of the obtained extruded resin sheet.

In the fabrication of a single layer sheet or a multilayer resin sheet, any resin sheet molding method can be used. Examples include, for instance, methods for melt-extruding raw material resins using a single-screw extruder when the sheet is single layer and multiple single-screw extruders when the sheet is multilayer and obtaining a resin sheet with a T-die. When the sheet is multilayer, a feed block or a multi-manifold die can be used. Moreover, the layer configurations of the embodiments of the resin sheet of the present application are basically as discussed previously, but beyond these, for example, scrap raw material generated in a manufacturing process for the resin sheet or molded container of the present invention may be added to the substrate layer or laminated as a further layer so long as degradation of physical properties and the like is not observed.

The method for adding the hair-like bodies is not particularly limited and any method known by a person skilled in the art can be used. Examples include, for instance, a manufacturing method using an extrusion molding technique, a manufacturing method using a roll-to-roll technique, a manufacturing method using a photolithography technique, a manufacturing method using a hot pressing technique, a manufacturing method using a pattern roll and a UV curable resin, a manufacturing method using a 3D printer, a method for covalently bonding with a polymerization reaction after embedding the hair-like bodies in the resin layer, and the like.

For example, when using an extrusion molding technique, the resin sheet according to the present invention can be manufactured by extruding a resin sheet with a T-die technique and casting with a transfer roll on which a relief process has been performed and a touch roll so as to add the shapes of hair-like bodies to a surface of the resin sheet.

As the transfer roll on which a relief process has been performed, a roll in which a micro-relief, with a size from several micrometers to several hundreds of micrometers, has been applied regularly on a surface thereof with a laser engraving method, an electrocasting method, an etching method, a mill engraving method, or the like can be used. Here, regular means that the relief is in an arranged state that is not random, that is, is arranged in an orderly fashion in one direction or in two directions. The arrangement of the relief in certain embodiments can be selected from a vertically and horizontally arranged grid arrangement, a staggered arrangement, and the like. Examples of the shape of the relief part include, for example, if the shape of a recess, funnel shapes (cones, quadrangular pyramids, triangular pyramids, hexagonal pyramids, and the like), semicircles, rectangles (quadrangular prisms), and the like. As the size thereof, the diameter of the opening of the recess, the depth of the recess, and the spacing of the recess shapes are from several micrometers to several hundreds of micrometers. For example, a metal, a ceramic, or the like can be used as the material of the transfer roll. The spacing between the hair-like bodies can be adjusted by adjusting the spacing between the recesses on the transfer roll and the height of the hair-like bodies can be adjusted by adjusting the depth of the recesses on the transfer roll, and the tactile sensation can also be adjusted thereby.

Further, it is preferable that a relief process with a high aspect ratio be performed on the transfer roll surface. For example, the aspect ratio (recess depth/recess opening diameter) when processing recess shapes into the transfer roll surface is preferably 1.0-9.0. In performing a high-aspect-ratio relief process on the transfer roll surface, in comparison with an etching method, a blasting method, a mill-engraving method, or the like, a laser engraving method or an electrocasting method is suitable when performing precision processing in the depth direction and therefore is particularly suitably used.

For example, a metal, a ceramic, or the like can be used as the material of the transfer roll. Meanwhile, various materials can be used as the touch roll, for example, a roll made from silicone-based rubber, NBR-based rubber, EPT-based rubber, butyl rubber, chloroprene rubber, or fluorine rubber can be used. In certain embodiments, a touch roll with a rubber hardness (JIS K 6253) of 40-100 can be used. Further, a Teflon^{®} layer may be formed on the surface of the touch roll.

Various materials can be used as the touch roll, for example, a roll made from silicone-based rubber, NBR-based rubber, EPT-based rubber, butyl rubber, chloroprene rubber, or fluorine rubber can be used. In certain embodiments, a touch roll with a rubber hardness (JIS K 6253) of 40-100 can be used. Further, a Teflon^{®} layer may be formed on the surface of the touch roll.

The resin sheet of the present embodiment can be manufactured by using a roll set of the above transfer roll and touch roll.

In certain embodiments, the resin sheet of the present embodiment can be manufactured by adjusting the temperature of the transfer roll to a temperature near the crystal fusion temperature, the glass transition point, or the melting point of the thermoplastic resin (for example, 100-150°C when using a random polypropylene) and casting with a pinch pressure between the transfer roll and the touch roll of 30-120 Kg/cm². The cast resin sheet is taken in at a line speed of 0.5-30 m/minute using a pinch roll or the like.

Further, while the abovementioned embodiments are shown specifically, the present invention is not limited thereto.

### [Molded Article]

The molded article of the present invention is a molded article using the resin sheet of the present invention. The resin sheet of the present invention can be applied not only to typical moldings, but also to decorative moldings in which printed decoration is performed on a surface of a molded article during molding and the like. Examples of the molding method include, in addition to insert molding and in-mold molding, general vacuum molding and pressure molding, and as applications thereof, a method for heating and softening a resin sheet in vacuum and overlaying on (molding to) a surface of an existing molded product by opening under atmospheric pressure and the like, but the molding method is not limited thereto. Further, known sheet heating methods such as radiation heating with an infrared heater or the like, which is non-contact heating, can be adapted as a method to heat and soften a sheet before molding. In vacuum-pressure molding in certain embodiments, for example, a resin sheet is heated for 20-480 seconds at a surface temperature of 60-220°C and then molded onto a surface of an existing molded product and stretched to 1.0-4.0 times depending on the surface shape.

### [Product]

The resin sheet in which the hair-like bodies according to the present invention have been added to a surface thereof can be applied to a use requiring the good tactile sensation indicated above. For example, the resin sheet of the present invention can be applied to automobile interior materials, electronic devices, electronic device cladding, cosmetic containers or container members, stationery members, lighting fixture members, and daily commodity members.

Examples of automobile interior materials include the portions of the automobile interior that hands touch such as the steering wheel, dashboard, levers, and switches. Interior materials in which the abovementioned resin sheet is molded and pasted to a surface of a known instrument panel or pillar (for example, JP 2009-184421 A) can be raised as examples. By pasting the resin sheet, an interior material to which a good tactile sensation has been imparted can be configured. As the material of the resin sheet to be attached, in consideration of weather resistance and chemical resistance, an olefin-based resin, a vinyl chloride-based resin, or a urethane-based elastomer is preferable. The method for pasting the resin sheet and the interior material together is not particularly limited.

Examples of the electronic device cladding include transmitter housings for keyless entry systems, smartphone housings, smartphone cases, music player cases, game console housings, digital camera housings, electronic notebook housings, calculator housings, tablet housings, mobile computer housings, keyboards, mice, and the like. Portable transmitters in which the resin sheet of the present invention is molded and pasted to a surface of a portable transmitter housing of a known keyless entry system (for example, JP 2005-228911 A) can be raised as examples. By pasting the resin sheet, a portable transmitter to which a good tactile sensation has been imparted can be configured. As the material of the resin sheet to be pasted, an olefin-based resin or a urethane-based elastomer is preferable. The method for pasting the resin sheet and the housing together is not particularly limited.

Examples of cosmetic container members include containers for face cream, pack cream, foundation, and eyeshadow, and a cosmetic container in which the resin sheet of the present application is molded and pasted to a surface of a lid member of a known container for foundation (JP 2017-29608 A) can be raised as an example. By pasting the resin sheet, a cosmetic container to which a good tactile sensation has been imparted can be configured. As the material of the resin sheet to be pasted, an olefin-based resin or a urethane-based elastomer is preferable. The method for pasting the resin sheet is not particularly limited.

Examples of stationery members include book covers, notebook covers, pen case covers, and the like and for example, a book cover to which a good tactile sensation and waterproofing have been imparted can be configured by fabricating a known book cover (for example, JP 2007-246122 A) using the sheet of the present invention. Further, the form of the book cover is not particularly limited. As the material of the sheet, an olefin-based resin or a urethane-based elastomer is preferable. The method for manufacturing using the resin sheet is not particularly limited.

Examples of lighting equipment members include indoor or in-vehicle lighting equipment and a lighting device in which the resin sheet of the present invention is molded and pasted to a surface of a cover member of a known LED lighting device can be raised as an example. By pasting the resin sheet, an LED lighting device to which a good tactile sensation and light diffusibility have been imparted can be configured. As the material of the resin sheet to be pasted, an olefin-based resin or a fluorine-based resin is preferable. The method for pasting the resin sheet is not particularly limited.

Examples of daily commodity members include restroom products, indoor mats, sheets for tables, and the like and a toilet device in which the resin sheet of the present invention is molded and pasted to a surface of a seat member of the toilet device can be raised as an example. By pasting the resin sheet, a toilet device with a seat to which a good tactile sensation has been imparted can be configured. As the material of the resin sheet to be pasted, an olefin-based resin, a vinyl chloride resin, or a fluorine-based resin is preferable. The method for pasting the resin sheet is not particularly limited.

Furthermore, hair-like body sheets in which words or patterns are printed on the surface of the hair-like bodies with a general printing method (an offset printing method, a gravure printing method, a flexographic printing method, a screen-printing method, foil stamping, etc.) can be fabricated and applied to the abovementioned uses. The material of the resin sheet to be printed on is not particularly limited, but it is preferable that the printability with the ink used in printing be considered.

Further, a laminated body in which the resin sheet of the present invention is laminate molded (dry laminate molded or extrusion laminate molded) with a printed article on which words, patterns, or the like are printed (such as paper or a metal thin film) or with a non-woven cloth or the like can be fabricated. For example, a business card with a tactile sensation can be fabricated by laminate molding to the printing surface of the business card. The material of the resin sheet to be laminated is not particularly limited.

### EXAMPLES

The present invention shall be explained more specifically below using examples and comparative examples, but the present invention is not at all limited by the details of the examples and the like.

The raw materials used in the examples and the like are as follows.
(1) Hair-like bodies and base layer
   · (A) TPU (urethane-based elastomer) "A3086A17J" (manufactured by BASF)
(2) Substrate layer
   · (B) PC/polyester "PCX-6694" (manufactured by Sumika Polycarbonate Ltd.)

The evaluation methods for the various characteristics of the resin sheets and the molded articles in which the resin sheets were vacuum-pressure molded fabricated in the examples and comparative examples are as follows.

### (1) Average height of the hairlike bodies, average diameter of the hairlike bodies, average spacing between the hairlike bodies, and average thickness of the base layer and substrate layer

The height (h) of the hair-like bodies, the diameter (d) of the hair-like bodies, the spacing (t) between the hairlike bodies, and the thickness of the base layer and substrate layer of the resin sheet were measured using a laser microscope (VK-X100 manufactured by KEYENCE CORPORATION). The measured samples were cross-sectional slices cut from the resin sheets at three arbitrary locations using a microtome. The height of 10 hair-like bodies was measured for each sample and the arithmetic mean value of the 30 measurements was used as the average height of the hair-like bodies. For the average diameter of the hair-like bodies, the diameter of 10 hair-like bodies on each sample was measured at mid-height (h/2) and the arithmetic mean value of the 30 measurements was used. For the average spacing between the hair-like bodies, the distance from the center of the root of one hair-like body to the center of the root of a neighboring hair-like body was measured at 10 locations on each sample and the arithmetic mean value of the 30 measurements was used. For the average thickness of the base layer and substrate layer, the thickness of each layer was measured at 10 locations on each sample and the arithmetic mean value of the 30 measurements was used. The thickness of the base layer is the distance from the roots of the hair-like bodies to the interface with the other layer.

### (2) Good tactile sensation sensory evaluation

A sensory evaluation of the good tactile sensation was performed by having a total of ten people, five men and five women, touch the resin sheets. Evaluation was made using specific tactile sensations (smoothness, moistness, and the like) when touching the resin sheet surface and the tactile sensation felt by the greatest number of people was made the tactile sensation of the resin sheet surface.

### (3) Stiffness evaluation

In accordance with method A (45° cantilever method) described in JIS L 1096:2010, 8.21.1, five 20 mm × 150 mm test pieces fabricated in accordance with Article 6 of JIS L 0105 were taken from the manufactured resin sheets in both the vertical direction and the horizontal direction and the front and rear of each of the five test pieces were measured using a cantilever-type stiffness tester, and the average value made the stiffness in the present examples.
· Measurement device: Cantilever-type stiffness tester (manufactured by DAIEI KAGAKU SEIKI MFG. CO., LTD.)
· Measurement environment: Temperature: 23°C, humidity: 50%

### (4) Formativeness evaluation

The resin sheets were heated in vacuum with a double-sided vacuum molding machine (NGF-0709-S, manufactured by Fu-Se Vacuum Forming) and then molded articles were fabricated by vacuum pressure molding the resin sheets to a surface of a mold which was made into a mold for a container for storing miscellaneous goods. The sheet surface temperature during molding was set to 110°C as a temperature at which a good tactile sensation can be sufficiently maintained. Formativeness evaluation was performed by means of the appearance of sheet tracking in the corner portions of the bottom surface of the container. As the evaluation criteria, ∘ was given when the sheet was able to track and × was given when the sheet was unable to track (when a break occurred or there was a gap between the container and the sheet).

### (5) Moldability during extrusion molding

∘ was given when a resin sheet extruded from an extruder using a T-die method could be taken in using a pinch roll without wrinkles developing when doing so and × was given when wrinkles occurred and the resin sheet could not be taken in well.

### [Examples 1 and 2 and Comparative Examples 1 to 4]

Thermoplastic resin (A), which forms the hair-like bodies and the base layer, was streamed from a 40 mm single-screw extruder and thermoplastic resin (B), which forms the substrate layer, was streamed from a 65-mm single-screw extruder to extrude a resin sheet with a T-die method. The extruded resin sheet was cast using a relief-processed transfer roll on which a relief process had been performed with chromium oxide spraying and a laser engraving method and which had been adjusted to 60-150°C and a silicone-based rubber touch roll having a rubber hardness of 70 and which had been adjusted to 10-90°C and taken in at a line speed of 1-15 m/minute using a pinch roll. Resin sheets with the compositions, the thicknesses, and the surface shapes shown in Table 1 were obtained thereby.

Evaluative testing of various characteristics was performed using the resin sheets obtained in the examples and comparative examples and the results are shown in Table 1.

**Table 1**

| | | HAIR-LIKE BODIES AND BASE LAYER | SUBSTRATE LAYER | NAPPED SHAPE | | | GOOD TACTILE SENSATION | STIFFNESS (mm) | FORMATIVENESS EVALUATION | MOLDABILITY DURING EXTRUSION MOLDING |
|---|---|---|---|---|---|---|---|---|---|---|
| | | TPU RESIN | PC/POLYESTER RESIN | AVERAGE HEIGHT, h (µm) | AVERAGE DIAMETER, d (µm) | AVERAGE SPACING, t (µm) | | | | |
| EXAMPLE 1 | COMPOSITION (MASS%) | 100 | 100 | 120 | 30 | 60 | SMOOTH, MOIST | 65 | ○ | ○ |
| | THICKNESS (µm) | BASE LAYER 310 (+ HAIR-LIKE BODIES 120) | 110 | | | | | | | |
| EXAMPLE 2 | COMPOSITION (MASS%) | 100 | 100 | 150 | 30 | 60 | SMOOTH, MOIST | 95 | ○ | ○ |
| | THICKNESS (µm) | BASE LAYER 240 (+ HAIR-LIKE BODIES 150) | 190 | | | | | | | |
| COMPARATIVE EXAMPLE 1 | COMPOSITION (MASS%) | 100 | 100 | 140 | 30 | 60 | SMOOTH, MOIST | > 150 | × | ○ |
| | THICKNESS (µm) | BASE LAYER 95 (+ HAIR-LIKE BODIES 140) | 320 | | | | | | | |
| COMPARATIVE EXAMPLE 3 | COMPOSITION (MASS%) | 100 | 100 | 120 | 30 | 60 | SMOOTH, MOIST | > 150 | × | ○ |
| | THICKNESS (µm) | BASE LAYER 200 (+ HAIR-LIKE BODIES 120) | 220 | | | | | | | |
| COMPARATIVE EXAMPLE 4 | COMPOSITION (MASS%) | 100 | 100 | 120 | 30 | 60 | SMOOTH, MOIST | > 150 | × | ○ |
| | THICKNESS (µm) | BASE LAYER 300 (+ HAIR-LIKE BODIES 120) | 260 | | | | | | | |
| COMPARATIVE EXAMPLE 5 | COMPOSITION (MASS%) | 100 | 100 | 100 | 30 | 60 | SMOOTH, MOIST | 17 | ○ | × |
| | THICKNESS (µm) | BASE LAYER 380 (+ HAIR-LIKE BODIES 100) | 5 | | | | | | | |

The following is clear from the results shown in Table 1.

It is shown that the resin sheets of Examples 1 and 2 satisfy the evaluation pertaining to tactile sensation and furthermore have the specified stiffness and satisfy the evaluation criteria for moldability during extrusion molding and formativeness, and that formativeness is preserved in the molding temperature range at which a good tactile sensation is maintained. Meanwhile, although the sheets of the comparative examples satisfy the evaluation pertaining to tactile sensation, these do not have the specified stiffness, breaks or gaps between the container and the sheet occurred in the formativeness evaluation test (Comparative Examples 1-3), wrinkles developed during extrusion molding (Comparative Example 4), and the evaluation criteria for moldability during extrusion molding and/or formativeness were not satisfied.

The present invention was described above using various embodiments, but it need not be mentioned that the technical scope of the present invention is not limited to the scope described in the abovementioned embodiments. It is clear to a person skilled in the art that it is possible to add various modifications or improvements to the above embodiments, without departing from the scope of the patent claims. Further, it is clear from the recitations of the patent claims that aspects in which such modifications or improvements are added are included in the technical scope of the present invention.

### REFERENCE SIGNS LIST

- 1: Hair-like bodies and base layer
- 1a: Base layer
- 1b: Hair-like bodies
- d: Diameter of hair-like bodies
- h: Height of hair-like bodies
- t: Spacing between hair-like bodies
- 2: Sealant resin layer
- 3: Substrate layer

## Claims

1. A resin sheet having: a base layer (1a) having hair-like bodies (1b) arranged regularly on one surface thereof; and a substrate layer (3) on the surface opposite the hair-like bodies (1b) of the base layer (1a), wherein
a thickness (a) of the substrate layer (3) is 10 µm or greater and 250 µm or less,
the thickness (a) of the substrate layer (3) and a thickness (b) of the base layer (1a) satisfy a ≤ b,
the substrate layer (3) comprises a polycarbonate-based resin,
the base layer (1a) and the hair-like bodies (1b) comprise a thermoplastic polyurethane resin, and
stiffness of the resin sheet measured in accordance with the 45° cantilever method of JIS L 1096:2010 is 150 mm or less.

2. The resin sheet according to claim 1, wherein the thickness (b) of the base layer (1a) is 10 µm or greater and 500 µm or less.

3. The resin sheet according to claim 1 or 2, having a sealant sheet (2) between the base layer (1a) and the substrate layer (3).

4. The resin sheet according to any one of claims 1 to 3, wherein the average height of the hair-like bodies (1b) is 30 µm or greater and 500 µm or less, the average diameter (d) of the hair-like bodies (1b) is 1 µm or greater and 60 µm or less, and the average spacing (t) between the hair-like bodies (1b) is 20 µm or greater and 200 µm or less.

5. An insert-molded or vacuum-molded molded article of the resin sheet according to any one of claims 1 to 4.

6. The molded article according to claim 5, wherein the molded article is molded on a surface of an automobile interior member, an electronic device, an electronic device cladding, a cosmetic container, or a container member.

7. A manufacturing method for the resin sheet according to any one of claims 1 to 4, comprising step for forming the hair-like bodies (1b) by melt-extruding a raw material resin and casting an obtained extruded resin sheet with a transfer roll on which a relief process has been performed and a touch roll.

## Patentansprüche

1. Eine Harzfolie, die Folgendes aufweist: eine Basisschicht (1a) mit haarähnlichen Körpern (1b), die regelmäßig auf einer Oberfläche davon angeordnet sind; und eine Substratschicht (3) auf der Oberfläche gegenüber den haarähnlichen Körpern (1b) der Basisschicht (1a), wobei
eine Dicke (a) der Substratschicht (3) 10 µm oder mehr und 250 µm oder weniger ist, die Dicke (a) der Substratschicht (3) und eine Dicke (b) der Basisschicht (1a) a ≤ b befriedigen,
die Substratschicht (3) ein polycarbonatbasiertes Harz beinhaltet,
die Basisschicht (1a) und die haarähnlichen Körper (1b) ein thermoplastisches Polyurethanharz beinhalten, und
die Steifigkeit der Harzfolie gemessen nach dem 45°-Cantilever-Verfahren nach JIS L 1096:2010 150 mm oder weniger beträgt.

2. Harzfolie gemäß Anspruch 1, wobei die Dicke (b) der Basisschicht (1a) 10 µm oder mehr und 500 µm oder weniger beträgt.

3. Harzfolie gemäß Anspruch 1 oder 2, mit einer Dichtungsfolie (2) zwischen der Basisschicht (1a) und der Substratschicht (3).

4. Harzfolie gemäß einem der Ansprüche 1 bis 3, wobei die durchschnittliche Höhe der haarähnlichen Körper (1b) 30 µm oder mehr und 500 µm oder weniger beträgt, der durchschnittliche Durchmesser (d) der haarähnlichen Körper (1b) 1 µm oder mehr und 60 µm oder weniger beträgt und die durchschnittliche Beabstandung (t) zwischen den haarähnlichen Körpern (1b) 20 µm oder mehr und 200 µm oder weniger beträgt.

5. Ein einsatzgeformter oder vakuumgeformter Formartikel der Harzfolie gemäß einem der Ansprüche 1 bis 4.

6. Formartikel gemäß Anspruch 5, wobei der Formartikel auf einer Oberfläche eines Kraftfahrzeuginnenraumelements, einer elektronischen Vorrichtung, einer Ummantelung einer elektronischen Vorrichtung, eines Kosmetikbehälters oder eines Behälterelements geformt ist.

7. Ein Herstellungsverfahren für die Harzfolie gemäß einem der Ansprüche 1 bis 4, das einen Schritt des Bildens der haarähnlichen Körper (1b) durch Schmelzextrusion eines Rohmaterialharzes und Gießen einer erhaltenen extrudierten Harzfolie mit einer Übertragungswalze, auf der ein Reliefprozess durchgeführt wurde, und einer Berührungswalze beinhaltet.

## Revendications

1. Une feuille de résine, laquelle présente : une couche formant base (1a) ayant des corps semblables à des poils (1b) disposés régulièrement sur une surface de celle-ci ; et une couche formant substrat (3) sur la surface opposée aux corps semblables à des poils (1b) de la couche formant base (1a), dans laquelle
une épaisseur (a) de la couche formant substrat (3) est de 10 µm ou plus et de 250 µm ou moins,
l'épaisseur (a) de la couche formant substrat (3) et une épaisseur (b) de la couche formant base (1a) satisfont a ≤ b,
la couche formant substrat (3) comprend une résine à base de polycarbonate,
la couche formant base (1a) et les corps semblables à des poils (1b) comprennent une résine de polyuréthane thermoplastique, et
la rigidité de la feuille de résine mesurée conformément au procédé du porte-à-faux à 45° de JIS L 1096:2010 est de 150 mm ou moins.

2. La feuille de résine selon la revendication 1, dans laquelle l'épaisseur (b) de la couche formant base (1a) est de 10 µm ou plus et de 500 µm ou moins.

3. La feuille de résine selon la revendication 1 ou la revendication 2, laquelle présente une feuille de produit de scellement (2) entre la couche formant base (1a) et la couche formant substrat (3).

4. La feuille de résine selon l'une quelconque des revendications 1 à 3, dans laquelle la hauteur moyenne des corps semblables à des poils (1b) est de 30 µm ou plus et de 500 µm ou moins, le diamètre moyen (d) des corps semblables à des poils (1b) est de 1 µm ou plus et de 60 µm ou moins, et l'espacement moyen (t) entre les corps semblables à des poils (1b) est de 20 µm ou plus et de 200 µm ou moins.

5. Un article moulé issu d'un moulage par insertion ou d'un moulage sous vide de la feuille de résine selon l'une quelconque des revendications 1 à 4.

6. L'article moulé selon la revendication 5, l'article moulé étant moulé sur une surface d'un élément d'intérieur automobile, d'un dispositif électronique, d'un enrobage de dispositif électronique, d'un contenant pour cosmétique, ou d'un élément de contenant.

7. Un procédé de fabrication pour la feuille de résine selon l'une quelconque des revendications 1 à 4, comprenant une étape pour former les corps semblables à des poils (1b) par extrusion à l'état fondu d'une résine formant matière première et coulée d'une feuille de résine extrudée obtenue à l'aide d'un rouleau de transfert sur lequel un processus de relief a été effectué et d'un rouleau de contact *(touch roll).*
